(19) Europäisches Patentamt
European Patent Office
Office européen des brevets

(11) **EP 2 124 327 B1**

(12) **FASCICULE DE BREVET EUROPEEN**

(45) Date de publication et mention de la délivrance du brevet:
**12.07.2017  Bulletin 2017/28**

(51) Int Cl.:
*H02P 6/16* *(2016.01)*   *H02K 29/06* *(2006.01)*
*H02P 23/14* *(2006.01)*

(21) Numéro de dépôt: **09159137.0**

(22) Date de dépôt: **30.04.2009**

(54) **Dispositif de détermination de la position angulaire d'un rotor d'une machine électrique tournante polyphasée et machine électrique tournante comprenant un tel dispositif**

Vorrichtung zur Bestimmung der Neigungsposition eines Rotors einer mehrphasigen elektrisch umlaufenden Maschine und eine solche Vorrichtung umfassende elektrisch umlaufende Maschine

Device for determining the angular position of a rotor of a multi-phase rotating electric machine and rotating electric machine comprising such a device

(84) Etats contractants désignés:
**AT BE BG CH CY CZ DE DK EE ES FI FR GB GR HR HU IE IS IT LI LT LU LV MC MK MT NL NO PL PT RO SE SI SK TR**

(30) Priorité:  **23.05.2008   FR 0853359**

(43) Date de publication de la demande:
**25.11.2009   Bulletin 2009/48**

(73) Titulaire: **Valeo Equipements Electriques Moteur 94046 Créteil Cedex (FR)**

(72) Inventeurs:
• **Bernard, François-Xavier**
  **94000 Creteil (FR)**
• **Louise, Christophe**
  **94140 Alforville (FR)**
• **Doffin, Hugues**
  **92290 Chatenay Malabry (FR)**

(56) Documents cités:
EP-A- 1 172 925    WO-A-2006/010864
FR-A- 2 896 638    US-A- 5 182 500

**Description**

L'invention concerne un dispositif de détermination de la position angulaire d'un rotor d'une machine électrique tournante polyphasée comprenant un stator.

L'invention concerne également une machine électrique tournante comprenant un tel dispositif.

Elle s'applique plus particulièrement à des machines réversibles, dites alterno-démarreurs, utilisées dans l'industrie automobile, aussi bien en mode alternateur qu'en mode moteur au démarrage ou en aide au décollage (en mode dit "boost"), typiquement à partir de 500 tours/mn.

Dans le cadre de l'invention, le terme "polyphasé" concerne plus particulièrement des machines électriques tournantes triphasées ou hexaphasées, mais peut aussi concerner des machines électriques tournantes biphasées ou fonctionnant sur un nombre de phases plus élevé.

Pour fixer les idées, on se placera dans ce qui suit dans le cas de l'application préférée de l'invention, à savoir le cas d'une machine électrique tournante réversible triphasée du type alterno-démarreur, sans que cela limite en quoi que ce soit la portée de l'invention.

Comme il est bien connu, une machine électrique tournante réversible comporte un alternateur comprenant :

- un rotor constituant un inducteur associé classiquement à deux bagues collectrices et deux balais par lesquels est amené un courant d'excitation; et
- un stator polyphasé portant plusieurs bobines ou enroulements, trois dans l'exemple de réalisation considéré, constituant un induit, qui sont connectés en étoile, ou le plus souvent en triangle dans le cas d'une structure triphasée, et qui délivrent vers un pont redresseur, en fonctionnement alternateur, une puissance électrique convertie. La machine comporte deux paliers, un avant et un arrière, pour la fixer au moteur thermique et pour fixer le stator. Le stator entoure le rotor. Le rotor est porté par un arbre supporté par les paliers avant et arrière. Les balais d'un circuit d'excitation du rotor sont alimentés à travers un régulateur de l'alternateur pour maintenir la tension de sortie de l'alternateur à une tension voulue pour alimenter un réseau d'alimentation électrique comprenant une batterie. L'alternateur permet de transformer un mouvement de rotation du rotor inducteur, entraîné par le moteur thermique du véhicule, en un courant électrique induit dans les bobinages du stator.

L'alternateur peut aussi être réversible et constituer un moteur électrique, ou machine électrique tournante, permettant d'entraîner en rotation, via l'arbre rotor, le moteur thermique du véhicule. Cet alternateur réversible est appelé alternateur-démarreur ou encore alterno-démarreur. Il permet de transformer l'énergie mécanique en énergie électrique et vice versa.

Ainsi, en mode alternateur, l'alterno-démarreur charge notamment la batterie du véhicule, tandis qu'en mode démarreur, l'alterno-démarreur entraîne le moteur thermique appelé également moteur à combustion interne, du véhicule automobile pour son démarrage.

Dans les machines réversibles de l'industrie automobile, par exemple, fonctionnant selon les modes moteur ou démarreur, le stator doit être piloté en courant de manière à appliquer à tout moment au rotor le couple nécessaire pour imprimer la rotation requise pour le fonctionnement du moteur. Le couple appliqué au rotor, et donc le courant fourni aux phases du stator, est une fonction sinusoïdale de la position angulaire, repérée par un angle $\theta$, du rotor par rapport au stator.

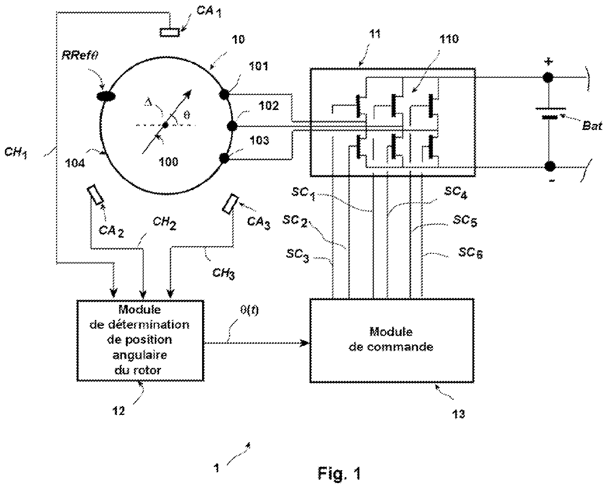

La figure 1, placée en fin de la présente description, illustre schématiquement un système complet 1 de détermination de la position angulaire $\theta(t)$ du rotor d'un alterno-démarreur triphasé et de commande de cet organe, soit en mode alternateur, soit en mode moteur (démarreur).

Le système 1 comprend quatre sous-systèmes principaux : un alterno-démarreur 10, un convertisseur 11 de courant électrique alternatif-continu réversible, un module 13 de commande de ce convertisseur et un module 12 de détermination de position angulaire $\theta$ du rotor 100 (symbolisé par une flèche tournant autour de son axe de rotation $\Delta$).

Le convertisseur 11 est généralement constitué d'un pont de redresseurs électronique, comprenant trois banches de transistors MOS-FET de puissance, sous la référence unique 110, une pour chaque phase. Une telle structure est bien connue de l'Homme de Métier et il est inutile de la décrire plus avant.

En mode alternateur, l'alterno-démarreur 10 alimente en courant alternatif triphasé le convertisseur 11 par ses trois sorties, 101 à 103, qui correspondent aux jonctions entre les trois bobinages (non représentés sur la figure 1) constituant le stator 104 de l'alterno-démarreur 10. Celui-ci convertit le courant alternatif triphasé en courant continu de façon à (re)charger la batterie *Bat* dont est muni le véhicule (non représenté sur la figure 1). Celle-ci à son tour alimente divers organes de ce véhicule : électronique de bord, climatisation, phares, etc.

En mode moteur, c'est-à-dire en mode démarreur, l'alterno-démarreur 10 est alimenté en énergie électrique triphasée par le convertisseur réversible 11, qui fonctionne en mode générateur de courant triphasé.

Quel que soit le mode considéré, les transistors MOS-FET 110 sont commandés selon une séquence appropriée de six signaux de commandes, $SC_1$ à $SC_6$, générés par le module de commande 13. Comme il est bien connu également,

ces signaux, $SC_1$ à $SC_6$, doivent être générés en synchronisme avec la position angulaire $\theta$ du rotor 100 qui détermine les phases relatives des courants délivrés par les sorties, 101 à 103, de l'alterno-démarreur 10.

Il est nécessaire de ce fait de déterminer cette position angulaire $\theta$ avec une grande précision pour obtenir un fonctionnement correct des ponts redresseurs, notamment pour éviter tout risque de détérioration des composants semi-conducteurs, mais aussi et surtout, en mode moteur ou démarreur, un couple optimisé fourni par l'alterno-démarreur 10.

C'est la fonction qui est dévolue au module 12 de détermination de la position angulaire du rotor 100, de façon à générer un signal $\theta(t)$ représentant la variation instantanée de la position angulaire mesurée et à le transmettre en entrée du module de commande 13.

Dans l'Art Connu, diverses méthodes ont été proposées à cette fin.

Certaines machines électriques réversibles, notamment celles utilisées dans l'industrie automobile, sont actuellement équipées d'un dispositif connu sous le nom de résolveur disposé en bout de l'arbre du rotor de la machine. Un tel résolveur est décrit, à titre d'exemple non exhaustif, dans la demande de brevet US 2002/0063491 A1. Le résolveur comporte lui-même un stator et un rotor qui sont respectivement fixes par rapport au stator et au rotor de la machine réversible. Le résolveur mesure le champ magnétique issu de son propre rotor. Ce champ magnétique étant fixe par rapport audit rotor qui est lui-même fixe par rapport au rotor de la machine, est représentatif de la position du rotor même de la machine.

Toutefois, ce type d'équipement présente un certain nombre d'inconvénients et notamment les suivants :

- Les résolveurs sont en effet coûteux et leur mise en oeuvre pour les rendre opérationnels est complexe en raison du couplage à effectuer entre le résolveur et la machine réversible proprement dite, ce qui nécessite la présence d'un composant électronique de calcul pour fournir une position correcte du rotor de la machine réversible à partir des paramètres de couplage.
- D'autre part, les résolveurs sont sensibles aux perturbations magnétiques causées par le champ magnétique de fuite produit par le rotor, ce qui entraîne un dysfonctionnement du système, donc des erreurs de mesure et une mauvaise commande de la machine. Pour limiter cet inconvénient, il faut avoir recours à une protection magnétique, comme un tube en acier inoxydable placé entre le rotor et le résolveur en bout d'arbre. De plus, la tenue mécanique de ces dispositifs n'est pas parfaite puisqu'ils sont particulièrement sensibles aux vibrations de la machine du fait du montage sur le bout de l'arbre du rotor. De plus, leur encombrement est un problème et ne va pas dans le sens de permettre une meilleure compacité de la machine électrique.
- Enfin, leur tenue au brouillard salin, aux poussières n'est pas totalement satisfaisante.

Pour pallier à ces inconvénients, la Demanderesse a proposé, dans la demande de brevet international WO 2006/010864 A2, un dispositif de détermination de la position d'un rotor d'une machine électrique tournante comprenant un stator, qui permet d'obtenir la position angulaire précise recherchée tout en étant bon marché, simple à mettre en oeuvre et peu sensible aux perturbations magnétiques.

Le dispositif enseigné dans cette demande de brevet comprend une pluralité de capteurs de champ magnétique fixes par rapport au stator de la machine électrique tournante et aptes à délivrer des premiers signaux représentatifs d'un champ magnétique tournant détecté par ces capteurs, et des moyens de traitement de ces premiers signaux par un opérateur apte à fournir des deuxièmes signaux dépendant de la position angulaire atteinte par le rotor.

Dans un exemple de réalisation, illustré par la figure 1, on utilise trois capteurs à effet Hall linéaires, $CA_1$ à $CA_3$, placés à 120° électrique sur la machine électrique tournante, en l'occurrence l'alterno-démarreur 10, en vis-à-vis d'une cible (non représentés sur la figure 1) solidaire du rotor 100 et magnétisée alternativement Nord/Sud pour chaque pôle de la machine. Pour une plus ample description, on se reportera avec profit à la description de la demande de brevet international WO 2006/010864 A2 précitée. On a également représenté sur la figure 1 un repère angulaire de référence $RRef\theta$ physiquement lié au rotor 100 de l'aterno-démarreur 10.

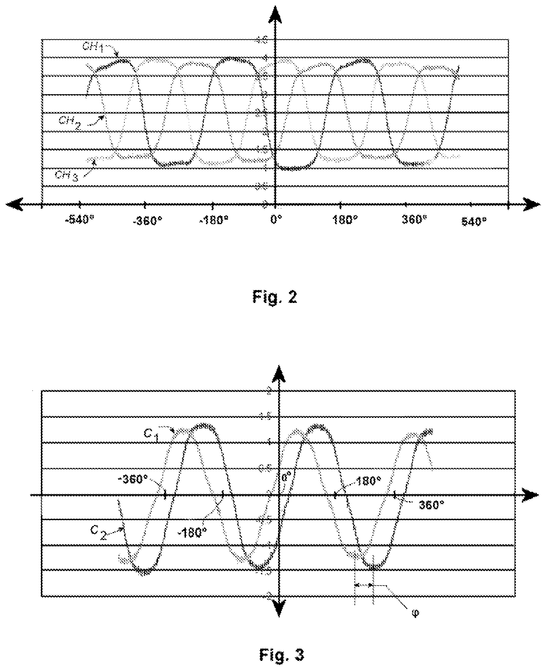

La figure 2, placée en fin de la présente description, illustre schématiquement un exemple d'une série de trois signaux, $CH_1$ à $CH_3$, délivrés par les capteurs, $CA_1$ à $CA_3$, l'alterno-démarreur 10 tournant à vitesse fixe.

L'axe des ordonnées est gradué en amplitudes, à titre d'exemple, pour fixer les idées, entre 0 et 4,5V, et l'axe des abscisses en angles (degrés).

On constate expérimentalement que les signaux, $CH_1$ à $CH_3$, que l'on qualifiera de "bruts", comportent généralement un fort taux d'harmoniques, notamment un taux important d'harmonique 3 et que leurs amplitudes relatives sont différentes. Il est donc difficile de construire à partir de ces signaux bruts, $CH_1$ à $CH_3$, très imparfaits, des signaux se rapprochant d'une fonction sinusoïdale idéale (c'est-à-dire exempts d'harmoniques), d'amplitudes identiques, d'offsets nuls et déphasés entre eux de façon non triviale (déphasage non multiple de 180°).

Le principe de base exposé dans international WO 2006/010864 A2 est de trouver deux combinaisons linéaires distinctes qui permettent, à la fois d'obtenir les deux sinusoïdes désirées, tout en s'affranchissant le mieux possible des problèmes rappelés ci-dessus.

En première approximation, il est possible d'admettre que les capteurs, $CA_1$ à $CA_3$, ont des caractéristiques

identiques ou pour le moins très proches, qu'il sont placés dans un même environnement thermique et électromagnétique et donc que les signaux délivrés par ces capteurs gardent des caractéristiques communes. Ces hypothèses, ainsi qu'une relation angulaire déterminée entre ces capteurs, conduisent à considérer que :

- leurs offsets évoluent en même temps en fonction d'un champ perturbateur éventuel (comme, par exemple, la magnétisation du rotor) ;
- leurs taux d'harmonique d'ordre 3 sont très semblables et en phase avec leurs harmoniques fondamentaux ; et
- les signaux électriques générés par ces capteurs sont déphasés d'environ 120°.

Ces hypothèses rendent possible le choix de deux combinaisons linéaires qui annulent en partie l'harmonique d'ordre 3 et les offsets. De façon simple, en choisissant pour combinaisons linéaires les différence entre deux signaux de sortie de capteurs on obtient deux signaux déphasés de 60° et qui répondent aux critères de choix exprimés plus haut.

La figure 3, placée en fin de la présente description, illustre schématiquement le résultat obtenu. L'axe des ordonnées est gradué en amplitudes, à titre d'exemple pour fixer les idées entre -2V et +2V, et l'axe des abscisses en degrés. On a également représenté, sur cette figure 3, le déphasage $\varphi$ entre les deux signaux $C_1$ et $C_2$.

On constate aisément à l'examen de la figure 3 que les deux courbes, $C_1$ et $C_2$, se rapprochent de fonctions sinusoïdales idéales. Les signaux représentés par ces courbes sont recentrés et contiennent moins d'harmoniques que les signaux bruts (Figure 2 : $CH_1$ à $CH_3$).

Néanmoins, les amplitudes de ces signaux ne sont pas complètement identiques et leurs offsets ne sont pas parfaitement nuls. Il s'ensuit qu'une étape de calibration en usine, en fin de chaîne de chaîne de fabrication, s'avère nécessaire.

Pour ce faire, on peut soustraire une valeur réglable à chacun des signaux afin d'annuler chaque offset. Cette valeur signée peut être obtenue de manière purement analogique, par exemple à l'aide d'un potentiomètre ou d'un pont résistif ajustable (par exemple en mettant en oeuvre un procédé dit de "trimmage laser"), ou semi-analogique en utilisant une valeur numérique convertit en valeur analogique. Enfin, une solution entièrement numérique est également possible si les signaux sont convertis en signaux numériques.

En ce qui concerne la calibration de l'amplitude, un seul réglage est nécessaire car il suffit que les amplitudes des signaux soient égales. Pour ce faire on peut recourir à un amplificateur à gain réglable. Cet amplificateur à gain variable peut être purement analogique, semi-analogique ou entièrement numérique. Il est à noter que la calibration en amplitude aurait pu être réalisée au préalable sur deux des signaux bruts délivrés par les capteurs, $CA_1$ à $CA_3$, afin que les combinaisons linéaires ultérieures soient plus efficaces pour enlever l'harmonique d'ordre 3. L'inconvénient de ce procédé réside dans le fait qu'un réglage supplémentaire est nécessaire et que l'on ne corrige pas d'éventuelles disparités d'amplification des combinaisons linéaires elles-mêmes.

Une fois les deux sinusoïdes obtenues (courbes $C_1$ et $C_3$), il devient possible d'extraire directement la valeur de la position angulaire $\theta$. Pour ce faire, en divisant les deux signaux représentés par les courbes, $C_1$ et $C_3$, on s'affranchit de l'amplitude, puis, à l'aide d'une fonction mathématique ou d'un tableau, on peut inverser la fonction et déterminer le quadrant angulaire grâce aux signes des signaux. Pour fixer les idées, à titre d'exemple non limitatif, si le déphasage entre signaux est de $\varphi = 90°$ par exemple, il s'agit d'une fonction ArcTangente. De nouveau, pour une plus ample description du procédé, on se reportera avec profit à la description de la demande de brevet international WO 2006/010864 A2 précitée. Le procédé selon WO 2006/010864 A2 donne de bons résultats et atteint les buts que se fixe cette demande de brevet, du moins si les signaux se rapprochent vraiment d'une fonction sinusoïdale pure (c'est-à-dire présentant peu d'harmoniques et peu de bruit). Dans la pratique, ces conditions de fonctionnement, que l'on peut qualifier "d'idéal", sont rarement réunies. Il s'ensuit que, toujours dans la pratique, le procédé qui vient d'être rappelé s'avère souvent peu satisfaisant.

L'objectif de l'invention est de proposer un procédé de détermination de la position angulaire obviant les inconvénients de l'Art Connu, d'une part, dont certains viennent d'être rappelé, et, d'autre part, plus robuste, ce sans en augmenter significativement ni la complexité, ni le coût.

Pour ce faire, selon une caractéristique essentielle, le procédé mis en oeuvre dans le dispositif selon l'invention consiste à estimer la position angulaire réelle du rotor de la machine électrique tournante à partir de signaux sinusoïdaux obtenus par des combinaisons linéaires des signaux de capteurs, comme dans WO 2006/010864 A2, mais en utilisant un asservissement entre une position angulaire réelle et une position angulaire estimée. Le dispositif de l'invention comporte une boucle de rétroaction, que l'on appellera « boucle de tracking », dont le comportement est semblable à celui d'une boucle à verrouillage de phase ou "PLL" selon la terminologie anglo-saxonne couramment utilisée (pour "Phase Lock Loop").

Les circuits composant le dispositif de détermination de la position angulaire du stator sont agencés de tels sortes que la relation (1) suivante soit satisfaite :

$$sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est})$$

relation dans laquelle :

- $\theta_{real}$ représente la position angulaire réelle du rotor ;
- $\theta_{est}$ représente la position angulaire estimée du rotor ; et
- $\varphi_1$ et $\varphi_2$ représentent les déphasages des signaux correspondant à des décalages angulaires des capteurs par rapport à un repère angulaire de référence lié au stator de la machine électrique tournante.

Il s'ensuit que $\varphi = (\varphi_1 - \varphi_2)$ est une constante (ces deux déphasages étant déterminés à partir d'un même repère angulaire de référence) et représente le déphasage entre les signaux $\theta_{real}$ et $\theta_{est}$.

Cette relation permet d'obtenir un signal d'erreur entre la position angulaire réelle et la position angulaire estimée.

La boucle dite de "tracking" permet de minimiser l'erreur entre $\theta_{real}$ et $\theta_{est}$. Si cette erreur devient faible, il est bien connu que $sin(\theta_{real} - \theta_{est})$ est sensiblement égal à $(\theta_{real} - \theta_{est})$. Le deuxième terme de la relation (1) devient alors sensiblement égal à $K(\varphi_1 - \varphi_2)$, avec $K$ constante égale à $sin(\varphi)$.

De plus, l'entité inventive a démontré que des déphasages de 120° et plus particulièrement 60° entre les signaux électriques générés par les capteurs sont particulièrement bénéfiques pour la suppression de l'harmonique 3.

L'invention a donc pour objet principal un dispositif de détermination de la position angulaire d'un rotor d'une machine électrique tournante polyphasée comprenant un stator et une pluralité de capteurs de champ magnétique, fixes par rapport au stator et aptes à délivrer des premiers signaux représentatifs d'un champ magnétique tournant détecté par lesdits capteurs.

Conformément à l'invention, le dispositif de détermination de la position angulaire comprend des moyens de génération, à partir de combinaisons linéaires desdits premiers signaux, d'au moins un premier et un deuxième signaux sinusoïdaux, déphasés d'une valeur déterminée $\varphi$ différente de zéro et de 180°, représentant une position angulaire du rotor dite réelle, en ce qu'il comprend des moyens de détermination d'une valeur de position angulaire du rotor dite estimée par asservissement entre lesdites positions angulaires réelle et estimée en mettant en oeuvre une boucle de rétroaction dite de "tracking" réinjectant en entrée au moins des troisième et quatrième signaux sinusoïdaux déterminés à partir de ladite valeur de position angulaire estimée et déphasés de ladite valeur déterminée $\varphi$, et en ce que lesdits moyens de détermination de la valeur estimée de position angulaire du rotor comprennent des premiers et seconds moyens de multiplication) desdits premier et troisième signaux, d'une part, et desdits second et quatrième signaux sinusoïdaux, d'autre part, et de soustraction des résultats des ces multiplications, de manière à ce que la relation suivante soit satisfaite à tout instant :

$$sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est}),$$

relation dans laquelle $\theta_{real}$ et $\theta_{est}$ sont lesdites positions réelle et estimée, $\varphi_1$ et $\varphi_2$ des déphasages desdits premier et deuxième signaux sinusoïdaux par rapport à un repère de référence lié au dit stator et ledit déphase déterminé $\varphi$ étant égal à $(\varphi_2 - \varphi_1)$.

L'invention a encore pour objet une machine électrique tournante polyphasée.

L'invention va maintenant être décrite de façon plus détaillée en se référant aux dessins annexés, parmi lesquels :

- la figure 1 illustre schématiquement un exemple de réalisation d'un dispositif de détermination de la position angulaire d'un rotor d'un alterno-démarreur selon l'art connu ;
- la figure 2 est un diagramme illustrant un exemple de signaux délivrés par trois capteurs magnétiques de mesure de position angulaire du rotor mis en oeuvre dans le dispositif de la figure 1 ;
- la figure 3 est un diagramme illustrant deux signaux sinusoïdaux déphasés obtenus par une combinaison linéaires des signaux précédents, utilisables pour déterminer la position angulaire du rotor ;
- la figure 4 illustre un exemple de réalisation d'un dispositif complet de détermination de la position angulaire d'un rotor d'un alterno-démarreur selon un mode de réalisation préféré de l'invention ; et
- la figure 5 illustre un bloc-diagramme des fonctions d'un module supplémentaire mis en oeuvre dans le dispositif de la figure 4 implémentant un système de filtrage hystérétique.

Dans ce qui suit, sans en limiter en quoi que ce soit sa portée, on se placera ci-après dans le cadre de l'application préférée de l'invention, sauf mention contraire, c'est-à-dire dans le cas d'un dispositif de détermination de la position angulaire d'un rotor d'un alterno-démarreur mettant en oeuvre un asservissement entre une position angulaire mesurée et une position angulaire estimée.

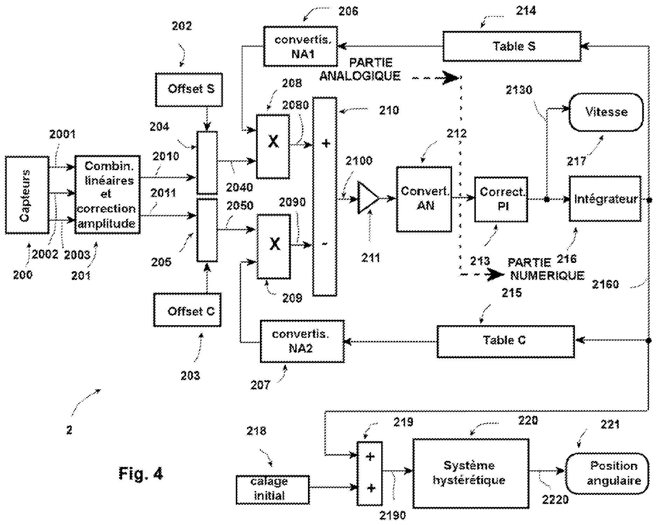

La figure 4 illustre un exemple de dispositif 2 de détermination de la position angulaire d'un rotor d'un alterno-démarreur selon un mode de réalisation préféré de l'invention.

L'alterno-démarreur (non illustré sur cette figure) peut être d'un type tout à fait similaire à l'art connu, voire identique. Il peut s'agir par exemple de l'alterno-démarreur 10 de la figure 1. De même, les capteurs du bloc 200 ont la même fonction que ceux de la figure 1. Dans la forme de réalisation particulière décrite ici, on implémente, par exemple, trois capteurs à effet Hall ($Ca_1$ à $Ca_3$) disposés à 120 ° électrique. Bien entendu, l'invention ne se limite pas à ce nombre de capteurs et à cette relation angulaire particulière de 120° entre ceux-ci. Comme indiqué plus haut, une relation angulaire de 60° entre les capteurs est très bénéfique à la suppression de l'harmonique 3. Selon les applications particulières de l'invention, l'Homme du Métier choisira le nombre de capteurs et la relation angulaire entre eux la plus appropriée à l'application considérée.

Dans cette forme de réalisation, les capteurs $Ca_1$ à $Ca_3$ délivrent sur les liaisons, 2001 à 2003, trois signaux « bruts » du type de ceux illustrés par la figure 2, qui sont transmis à un module 201 de combinaisons linéaires et de correction d'amplitude générant sur ses sorties, liaisons 2010 et 2011, deux signaux du type de ceux illustrés par la figure 3.

Les modules, 204 et 205, appliquent à ces signaux des valeurs d'offsets, délivrés par les modules 202 et 203, respectivement. Les modules, 202 et 203, peuvent être constitués par des circuits de mémoire contenant des valeurs d'offset prédéterminées.

Sur les sorties, 2040 et 2050, des modules 204 et 205, on dispose donc de deux signaux sinusoïdaux, centrés sur un axe (c'est-à-dire sans offset) et de même amplitude, déphasés d'une valeur φ (figure 3 : $C_1$ et $C_2$) déterminée non triviale, c'est-à-dire différente de 0° ou 180°.

Ces deux composantes, dérivées des signaux mesurés par les capteurs 200 (figure 2 : CH1 à CH3) et mises en forme pour s'approcher au mieux de fonctions sinusoïdales, sont transmises, chacune, à des premières entrées de multiplicateurs analogiques, 208 et 209, respectivement, via les liaisons 2020 et 2040. Elles représentent donc deux instances de la valeur instantanée de la position angulaire mesurée du rotor 100 (figure 1). Ces multiplicateurs analogiques, 208 et 209, reçoivent sur des secondes entrées, deux composantes dérivées de la valeur instantanée de la position angulaire estimée par deux branche de rétroaction qui vont être détaillées ci-après, conformément à l'une des caractéristiques essentielle de l'invention, ce qui a été appelé « boucle de tracking ». On obtient donc en sorties, 2080 et 2090, les résultats des deux multiplications du premier membre de la relation (1) : $sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est})$.

Les signaux de sortie des deux modules de multiplication, 208 et 209, sont transmis à un module 210 effectuant la soustraction analogique de ces signaux, plus précisément le signal sur la liaison de sortie 2080 du module 208 est transmis à une entrée «+» et le signal sur la liaison de sortie 2090 du module 209 à une entrée «-» du module 210. On obtient donc en sortie 2100 du module 210 le résultat de la soustraction du premier membre de la relation (1) précitée.

En tant que de besoin, le signal de sortie du module 210 est amplifié par un amplificateur 211 de gain déterminé G, puis converti en un signal numérique par un convertisseur analogique-numérique 212.

Jusqu'à ce point, les circuits du dispositif 2 sont de type analogique.

Les deux étages suivants, avant d'appliquer une rétroaction, sont constitués d'un module correcteur numérique 213, du type proportionnel intégral dit "PI", suivi d'un module intégrateur numérique « pur » 216, comme il a été précédemment indiqué.

La sortie 2130 du module 213 donne la vitesse du rotor 100 (figure 1) et est transmise à un module 217 de traitement de ce signal, par exemple un dispositif d'affichage.

La sortie 2160 de l'intégrateur 216 donne la position angulaire estimée et est rebouclée, par deux branches parallèles, vers les secondes entrées des multiplicateurs 208 et 209.

La position estimée permet d'adresser directement deux tables (ou encore une seule table exploitée deux fois en multiplexant l'accès, une fois par la position estimée et une autre fois par la somme de la position estimée et d'un offset numérique constant représentant un déphasage pré-calibré) contenant les sinus désirés. Ces tables peuvent être constituées par des mémoires, par exemples de type à lecture seule dit R.O.M. (pour "Read Only Memory").

Dans l'exemple de réalisation décrit sur la figure 4, les branches, que l'on appellera arbitrairement supérieure et inférieure respectivement, comprennent chacune, en cascade, une table, respectivement 214 et 215 (également référencées "*Table S*" et "*Table C*"), adressées par le signal numérique présent sur la sortie du module 216, et un convertisseur numérique-analogique, 206 et 207 (également référencés "NA1" et "NA2"). Cette disposition permet de repasser de la partie numérique du dispositif 2 à la partie analogique de celui-ci constituée par les organes d'entrées jusqu'au module 212.

La branche supérieure (sortie du convertisseur numérique-analogique 206) transmet à la seconde entrée du multiplicateur analogique 208 le signal suivant :

$$S_S = A_s \sin(\theta_{est}) \text{ calculé par la } \textit{Table S } 214 \text{ (2)}$$

La branche inférieure (sortie du convertisseur numérique-analogique 207) transmet à la seconde entrée du multiplicateur analogique 209 le signal suivant :

$$S_C = A_c \sin(\theta_{est} + \varphi) \text{ calculé par la } \textit{Table S } 215 \text{ (3),}$$

$\varphi$ représentant le déphasage ($\varphi_2 - \varphi_1$) entre les deux signaux sinusoïdaux rebouclés en entrées du dispositif 2. Ce déphasage $\varphi$ dépend des positions des capteurs (figure 1 : $Ca_1$ à $Ca_3$), notamment de leurs positions par rapport au repère angulaire de référence $RRef\theta$ (figure 1), d'éventuels offsets dans les signaux de mesures et d'un certain nombre de paramètres physiques liés à la réalisation pratique du dispositif 2, notamment des caractéristiques réelles de l'alterno-démarreur 10, des capteurs de mesure $Ca_1$ à $Ca_3$, etc.. La solution la plus simple est de déterminer théoriquement une valeur du déphasage $\varphi$, constante et pré-calibrée, et de l'implémenter dans la table 215.

Il est à noter que l'opération de calibration d'amplitudes des signaux, $C_1$ et $C_2$ (figure 3) issus des combinaisons linéaires peut être réalisée directement dans les tables numériques, 214 et 215, en ajustant les amplitudes des sinus inclus dans ces tables, au lieu de traiter cette opération dans le module 201. Dans les relations (2) et (3), cette calibration est obtenue en multipliant les sinus par des constantes, $A_s$ et $A_c$, respectivement.

On peut s'arranger pour que $\varphi_1 = 0$ (dans ce cas $\varphi = \varphi_2$) et que les amplitudes de tous les signaux sinusoïdaux soient égales (c'est le cas si la calibration précitée est correctement réalisée). En tenant compte des relations (2) et (3) précitées, et des signaux injectés sur les premières entrées des modules multiplicateurs, 208 et 209, on obtient en sortie 2100 du soustracteur 210 le signal suivant :

$$V_{2100} = sin(\theta_{real}).sin(\theta_{est} + \varphi) - sin(\theta_{real} + \varphi).sin(\theta_{est}) \text{ (4)}$$

Un calcul trigonométrique classique permet de trouver la relation (4bis) ci-dessous :

$$V_{2100} = sin(\theta_{real}).sin(\theta_{est} + \varphi) - sin(\theta_{real} + \varphi).sin(\theta_{est}) = \sin(\varphi_2 - \varphi_1).\sin(\theta_{real} - \theta_{est})$$

Ou encore :

$$V_{2100} = sin(\theta_{real}).sin(\theta_{est} + \varphi) - sin(\theta_{real} + \varphi).sin(\theta_{est}) = \sin(\varphi).\sin(\theta_{real} - \theta_{est}) \text{ (4ter)}$$

puisque $\varphi = (\varphi_2 - \varphi_1) = \varphi_2$ comme indiqué ci-dessus.

Lorsque l'erreur tend vers zéro, $\sin(\theta_{real} - \theta_{est})$ peut se confondre avec l'erreur elle-même ($\theta_{real} - \theta_{est}$).

La relation (4ter) s'identifie donc bien à la relation (1) conforme au procédé de l'invention.

Un traitement purement numérique est également possible, les signaux $C_1$ et $C_2$ (figure 3) issus des combinaisons linéaires ayant été numérisés par échantillonnage. Dans cette hypothèse, la multiplication peut être réalisée en numérique ce qui simplifie le traitement. Par contre, ce procédé, s'il permet de simplifier certaines opérations, n'est pas exempt de difficultée. Il est en effet nécessaire de veiller à l'instantanéité des deux échantillonnages et surtout à la qualité de la résolution puisque l'erreur d'entrée de la boucle calculée par différence se trouve ainsi sous-échantillonnée.

La sortie 2160 de l'intégrateur 216 permet, théoriquement, d'obtenir la "position angulaire estimée" recherchée $\theta(t)$. Cependant, il y a généralement lieu d'appliquer une valeur de calage initiale, par exemple mémorisée dans le module 218 et additionnée au signal présent en sortie de l'intégrateur 216. Cette valeur de calage initiale donne la position angulaire physique vraie du rotor 100 (figure 1) pour une valeur de référence initiale $\theta = 0$. Cette opération est réalisée par l'intermédiaire d'un additionneur numérique 218, dont la sortie représente une valeur de position angulaire estimée corrigée.

Enfin, dans certaines circonstances de fonctionnement (par exemple, du fait du bruit ou instabilité haute fréquence de la boucle), il peut apparaître des fluctuations intempestives de la valeur de position angulaire estimée $\theta(t)$ préjudiciables au bon fonctionnement du convertisseur 11 de courant électrique alternatif-continu réversible, voire susceptibles d'occasionner la détérioration des composants semi-conducteurs 110. Aussi, dans un mode de réalisation préféré, on applique au signal de sortie 2190 de l'additionneur numérique 219 un filtrage du type dit "hystérétique" : module 220. On obtient sur la sortie filtrée 2220 du système hystérétique 220 un signal représentant une position angulaire estimée *θ(t)* pleinement utilisable par le module de commande 13 pour la génération de six signaux correctement déphasés pour la commande des ponts 110 du convertisseur 11 de courant électrique alternatif-continu réversible.

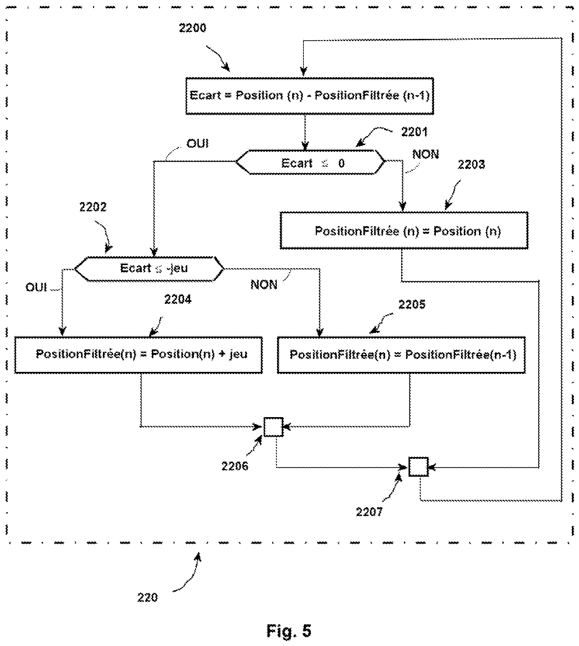

La figure 5 est un bloc diagramme illustrant un exemple de réalisation d'un système de filtrage hystérétique 220 pouvant être mis en oeuvre dans le dispositif 2 de la figure 4.

Le système de filtrage hystérétique fonctionne, par analogie, comme un jeu mécanique dans un engrenage : lors d'un changement de sens de vitesse, un pignon mené ne voit sa position reculer que lorsque le jeu éventuel entre les dents a été rattrapé, c'est-à-dire lorsque le changement de sens de vitesse a occasionné un déplacement du pignon meneur égal au jeu. Il est possible de reproduire ce comportement en implémentant les itérations décrites par le bloc diagramme de la figure 5. On appellera ci-après "jeu" la valeur de ce jeu, valeur qui dépend d'un certain nombre de paramètres physiques liés aux organes mis en oeuvre un système réel 1 de la figure 1.

Dans le bloc 2200, on calcule la valeur de l'écart, soit "Ecart", entre la position filtrée à l'étape (n-1), soit "PositionFiltrée(n-1)", et la position à l'étape n, soit "Position(n)", n étant un nombre entier arbitraire. Dans le bloc 2201, on compare la valeur de "Ecart" à zéro. Si le résultat de la comparaison est inférieur ou égal à zéro (branche "OUI"), on transmet la valeur "Ecart" au bloc 2202, dans le cas contraire (branche "NON"), on la transmet au bloc 2203. Dans le bloc 2203, on force la valeur de la position filtrée à l'étape n, soit "PositionFiltrée(n)", à la valeur de la position à l'étape n, soit "Position(n)". Dans le bloc 2202, on compare la valeur "Ecart" à la valeur "-jeu". Si le résultat de la comparaison est inférieur ou égal à "-jeu" (branche "OUI"), on transmet la valeur "Ecart" au bloc 2204, dans le cas contraire (branche "NON"), on la transmet au bloc 2205. Dans le bloc 2204, on force la valeur "PositionFiltrée(n)", à la valeur "Position(n) + jeu". Dans le bloc 2205, on force la valeur "PositionFiltrée(n)", à la valeur "PositionFiltrée(n-1)". Les sorties des blocs 2204 et 2205 sont additionnées dans un bloc 2206 et la sortie de ce bloc 2206 additionnée avec la sortie du bloc 2203. Enfin la sortie du bloc 2207 est rebouclée sur l'entrée du bloc 2200 pour réaliser une nouvelle itération (étape n+1).

Le système de filtrage hystérétique 220 conforme au bloc diagramme de la figure 5 permet d'appréhender un fonctionnement d'une machine électrique susceptible de tourner dans les deux sens, c'est le cas de alterno-démareur 10 de la figure 1.

Dans le cas où le sens de commande de la machine électrique tournante ne peut être qu'unidirectionnel, il suffit de retenir une valeur "jeu" infinie, afin de ne transmettre la position que lorsqu'elle croît (dispositif de type anti-retour équivalent à celui d'une roue dite "à rochet" en mécanique)

A la lecture de ce qui précède, on constate aisément que l'invention atteint bien les buts qu'elle s'est fixée, et qu'il est inutile de rappeler entièrement.

On rappelle cependant que la mise en oeuvre de ce qui a été appelé "boucle de tracking" permet d'ajuster avec précision la bande passante du signal de position angulaire θ(t) et la dynamique d'accélération d'une machine tournante (en mode moteur). Cette caractéristique permet d'éliminer le bruit perturbant le signal de position angulaire θ(t) de façon plus efficace.

Toutefois, l'invention n'est pas limitée au seul dispositif conforme à la réalisation explicitement décrite en regard au regard des figures 4 et 5, ni seulement à l'application préférée relative à détermination de la position angulaire de la position du rotor d'un alterno-démarreur triphasé en vue de la commande d'un dispositif redresseur réversible disposé entre cet alterno-démarreur et une source d'énergie électrique continue, par exemple une batterie rechargeable (figures 1 à 5).

Sans sortir du cadre de l'invention, le dispositif s'applique à toute machine tournante polyphasée, par exemple biphasée, triphasée, hexaphasée, etc., en mode moteur (démarreur) et/ou alternateur (générateur de courant).

## Revendications

**1.** Dispositif de détermination de la position angulaire d'un rotor d'une machine électrique tournante polyphasée comprenant un stator et une pluralité de capteurs de champ magnétique, fixes par rapport au stator et aptes à délivrer des premiers signaux représentatifs d'un champ magnétique tournant détecté par lesdits capteurs, **caractérisé en ce qu'**il comprend des moyens de génération (201), à partir de combinaisons linéaires desdits premiers signaux (2001-2003), d'au moins un premier (2010) et un deuxième (2011) signaux sinusoïdaux, déphasés d'une valeur déterminée *φ* différente de zéro et de 180°, représentant une position angulaire du rotor (100) dite réelle, **en ce qu'**il comprend des moyens de détermination d'une valeur de position angulaire du rotor (100) dite estimée par asservissement entre lesdites positions angulaires réelle et estimée en mettant en oeuvre une boucle de rétroaction dite de "tracking" (206-214, 207-215) réinjectant en entrée au moins des troisième et quatrième signaux sinusoïdaux déterminés à partir de ladite valeur de position angulaire estimée et déphasés de ladite valeur déterminée *φ*, et **en ce que** lesdits moyens de détermination de la valeur estimée de position angulaire du rotor comprennent des premiers et seconds moyens de multiplication (208-209) desdits premier et troisième signaux, d'une part, et desdits second et quatrième signaux sinusoïdaux, d'autre part, et de soustraction (210) des résultats de ces multiplications, de manière à ce que la relation suivante soit satisfaite à tout instant :

$$sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est}),$$

relation dans laquelle $\theta_{real}$ et $\theta_{est}$ sont lesdites positions angulaires réelle et estimée, $\varphi_1$ et $\varphi_2$ des déphasages desdits premier et deuxième signaux sinusoïdaux par rapport à un repère de référence (*RRef$\theta$*) lié au dit stator (104) et ledit déphase déterminé $\varphi$ étant égal à ($\varphi_2 - \varphi_1$).

2. Dispositif selon la revendication 1, **caractérisé en ce que** lesdits premiers et seconds moyens de multiplication sont constitués par des premier et second circuits multiplicateurs analogiques (208-209), **en ce que** ledit premier multiplicateur analogique (208) reçoit sur une première entrée ledit premier signal sinusoïdal et sur une seconde entrée ledit troisième signal sinusoïdal, et **en ce que** ledit second multiplicateur analogique (209) reçoit sur une première entrée ledit deuxième signal sinusoïdal et sur une seconde entrée ledit quatrième signal sinusoïdal.

3. Dispositif selon la revendication 2, **caractérisé en ce que** lesdits moyens de soustraction sont constitués par un circuit de soustraction analogique (210) recevant sur une entrée additionneuse (+) le signal de sortie (2080) dudit premier circuit multiplicateur (208) et sur une entrée soustractive (-) le signal de sortie dudit premier circuit multiplicateur (209), de manière à générer sur sa sortie un signal égal à [$sin(\theta_{real}+\varphi_1).sin(\theta_{est}+\varphi_2) - sin(\theta_{real}+\varphi_2).sin(\theta_{est}+\varphi_1)$].

4. Dispositif selon la revendication 1, **caractérisé en ce que** lesdits moyens de détermination de ladite valeur de position angulaire estimée du rotor comprennent, disposé en cascade à la sortie dudit circuit de soustraction analogique (210), un amplificateur analogique (211) de gain déterminé, un convertisseur analogique-numérique (212), un module correcteur numérique (213), du type proportionnel intégral dit "PI" et un module intégrateur numérique (216), **en ce que** ledit module correcteur numérique (213) fournit sur sa sortie (2130) un signal numérique représentatif de la vitesse de rotation dudit rotor (217) et **en ce que** ledit intégrateur numérique (216) fournit sur sa sortie (2160) un signal représentatif de ladite position angulaire estimée.

5. Dispositif selon la revendication 4, **caractérisé en ce que** ladite boucle de rétroaction comprend des première et seconde branches parallèles, **en ce que** ladite première branche comprend, en cascade, une première table numérique (214) adressée par ledit signal représentatif de ladite position angulaire estimée (2160) et générant en sortie une valeur numérique de sinus représentant ledit troisième signal sinusoïdal et un premier convertisseur numérique (206) convertissant ladite valeur numérique de sinus en un signal analogique transmis à la seconde entrée dudit premier circuit de multiplication (208), et **en ce que** ladite seconde branche comprend, en cascade, une seconde table numérique (215) adressée par ledit signal représentatif de ladite position angulaire estimée (2160) et générant en sortie une valeur numérique de sinus représentant ledit quatrième signal sinusoïdal et un second convertisseur numérique (207) convertissant ladite valeur numérique de sinus en un signal analogique transmis à la seconde entrée dudit second circuit de multiplication (209).

6. Dispositif selon la revendication 5, **caractérisé en ce que** lesdites première et seconde tables numériques (214-215) sont constituées par des mémoires à lecture seule du type dit R.O.M..

7. Dispositif selon la revendication 6, **caractérisé en ce que** lesdits moyens de détermination de valeur de position angulaire estimée du rotor (100) comprennent des moyens (218-219) pour appliquer à ladite valeur de position angulaire estimée une valeur de calage initiale donnant la position angulaire physique vraie dudit rotor (100) pour une valeur de référence initiale nulle.

8. Dispositif selon la revendication 7, **caractérisé en ce que** lesdits moyens pour appliquer une valeur de calage comprennent une mémoire (218) stockant ladite valeur et un additionneur numérique (219) additionnant la valeur de calage et ladite valeur de position angulaire estimée, de manière à générer en sortie (2190) une valeur de position angulaire estimée corrigée.

9. Dispositif selon la revendication 8, **caractérisé en ce que** lesdits moyens de détermination d'une valeur de position angulaire estimée du rotor (100) comprennent en outre des moyens de filtrage hystérétiques (220) disposés en sortie dudit additionneur numérique (219).

10. Dispositif selon l'une quelconque des revendications 1 à 8, **caractérisé en ce que** ladite machine électrique tournante polyphasée (10) est du type dit alterno-démarreur.

**11.** Dispositif selon l'une quelconque des revendication 1 à 10, **caractérisé en ce que** lesdits premiers signaux ($CH_1$ - $CH_3$) sont triphasés.

**12.** Dispositif selon l'une quelconque des revendication 1 à 11, **caractérisé en ce que** des déphasages entre lesdits premiers signaux ($CH_1$ - $CH_3$) sont de 60° ou de 120°.

**13.** Machine électrique tournante polyphasée comprenant un rotor (100) et un stator (104) **caractérisée en ce qu'**elle comprend un dispositif (2) de détermination de la position angulaire dudit rotor (100) selon l'une quelconque des revendications précédentes.

## Patentansprüche

**1.** Vorrichtung zum Bestimmen der Winkelposition eines Rotors einer mehrphasigen drehenden elektrischen Maschine, die einen Stator und mehrere Magnetfeldsensoren, die in Bezug auf den Stator fest sind und erste Signale liefern können, die ein durch die Sensoren detektiertes drehendes Magnetfeld repräsentieren, umfasst, **dadurch gekennzeichnet, dass** sie Mittel (201) zum Erzeugen anhand von Linearkombinationen der ersten Signale (2001-2003) wenigstens eines ersten (2010) und eines zweiten (2011) sinusförmigen Signals, die um einen bestimmten Wert $\varphi$ phasenverschoben sind, der von null und 180° verschieden ist und eine sogenannte wirkliche Winkelposition des Rotors (100) darstellt, umfasst, dass sie Mittel zum Bestimmen eines sogenannten geschätzten Wertes der Winkelposition des Rotors (100) durch Regelung zwischen den wirklichen und geschätzten Winkelpositionen durch Ausführen einer "tracking" genannten Rückkopplungsschleife (206-214, 207-215), die in den Eingang wenigstens ein drittes und ein viertes sinusförmiges Signal wieder einleitet, die anhand des geschätzten Wertes der Winkelposition bestimmt werden und um den bestimmten Wert $\varphi$ phasenverschoben sind, umfasst, und dass die Mittel zum Bestimmen des geschätzten Wertes der Winkelposition des Rotors erste und zweite Mittel (208-209) zum Multiplizieren des ersten und des dritten Signals einerseits mit dem zweiten und dem vierten sinusförmigen Signal andererseits und zum Subtrahieren (210) der Ergebnisse dieser Multiplikation umfassen, derart, dass die folgende Beziehung zu jedem Zeitpunkt erfüllt ist:

$$sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est}),$$

wobei in der Beziehung $\theta_{real}$ und $\theta_{est}$ die wirkliche bzw. die geschätzte Winkelposition sind, $\varphi_1$ und $\varphi_2$ die Phasenverschiebungen des ersten und des zweiten sinusförmigen Signals in Bezug auf einen Referenzkoordinatensystem (RREF($\theta$)), das mit dem Stator (104) in Beziehung steht, sind, wobei die bestimmte Phasenverschiebung $\varphi$ gleich ($\varphi_2$ - $\varphi_1$) ist.

**2.** Vorrichtung nach Anspruch 1, **dadurch gekennzeichnet, dass** die ersten und zweiten Multiplikationsmittel durch erste und zweite analoge Multipliziererschaltungen (208-209) gebildet sind, dass der erste analoge Multiplizierer (208) an einem ersten Eingang das erste sinusförmige Signal empfängt und an einem zweiten Eingang das dritte sinusförmige Signal empfängt und dass der zweite analoge Multiplizierer (209) an einem ersten Eingang das zweite sinusförmige Signal und an einem zweiten Eingang das vierte sinusförmige Signal empfängt.

**3.** Vorrichtung nach Anspruch 2, **dadurch gekennzeichnet, dass** die Subtraktionsmittel durch eine analoge Subtraktionsschaltung (210) gebildet sind, die an einem additiven Eingang (+) das Ausgangssignal (2080) der ersten Multipliziererschaltung (208) empfängt und an einem subtraktiven Eingang (-) das Ausgangssignal der zweiten Multipliziererschaltung (209) empfängt, derart, dass sie an ihrem Ausgang ein Signal erzeugt, das gleich

$$[sin(\theta_{real}+\varphi_1).sin(\theta_{est}+\varphi_2) \quad - \quad sin(\theta_{real}+\varphi_2).sin(\theta_{est}+\varphi_1)]$$

ist.

**4.** Vorrichtung nach Anspruch 1, **dadurch gekennzeichnet, dass** die Mittel zum Bestimmen des geschätzten Wertes der Winkelposition des Rotors angeordnet in Kaskade am Ausgang der analogen Subtraktionsschaltung (210) einen analogen Verstärker (211) mit bestimmtem Verstärkungsfaktor, einen Analog/Digital-Umsetzer (212), ein digitales Korrekturmodul (213) vom Proportional-Integral-Typ, genannt "PI", und ein digitales Integratormodul (216) umfassen, dass das digitale Korrekturmodul (213) an seinem Ausgang (2130 ein digitales Signal liefert, das die Drehzahl des Rotors (217) darstellt, und dass der digitale Integrator (216) an seinem Ausgang (2160) ein Signal liefert, das die geschätzte Winkelposition darstellt.

5. Vorrichtung nach Anspruch 4, **dadurch gekennzeichnet, dass** die Rückkopplungsschleife einen ersten und einen zweiten parallelen Zweig umfasst, dass der erste Zweig in Kaskade eine erste digitale Tabelle (214), die durch das Signal adressiert wird, das die geschätzte Winkelposition (2160) darstellt, und am Ausgang einen digitalen Sinuswert erzeugt, der das dritte sinusförmige Signal darstellt, und einen ersten digitalen Umsetzer (206), der den digitalen Sinuswert in ein analoges Signal umsetzt, das an den zweiten Eingang der ersten Multipliziererschaltung (208) übertragen wird, umfasst und dass der zweite Zweig in Kaskade eine zweite digitale Tabelle (215), die durch das Signal adressiert wird, die die geschätzte Winkelposition (2160) darstellt, und am Ausgang einen digitalen Sinuswert erzeugt, der das vierte sinusförmige Signal darstellt, und einen zweiten digitalen Umsetzer (207), der den digitalen Sinuswert in ein analoges Signal umsetzt, das an den zweiten Eingang der zweiten Multipliziererschaltung (209) übertragen wird, umfasst.

6. Vorrichtung nach Anspruch 5, **dadurch gekennzeichnet, dass** die erste und die zweite digitale Tabelle (214-215) durch Nurlesespeicher des Typs ROM gebildet sind.

7. Vorrichtung nach Anspruch 6, **dadurch gekennzeichnet, dass** die Mittel zum Bestimmen des geschätzten Wertes der Winkelposition des Rotors (100) Mittel (218-219) umfassen, um auf den geschätzten Wert der Winkelposition einen anfänglichen Blockierwert anzuwenden, der die wahre physikalische Winkelposition des Rotors (100) für einen anfänglichen Referenzwert von null angibt.

8. Vorrichtung nach Anspruch 7, **dadurch gekennzeichnet, dass** die Mittel zum Anwenden eines Blockierwerts einen Speicher (218), der den Wert speichert, und einen digitalen Addierer (219), der den Blockierwert und den geschätzten Wert der Winkelposition addiert, um am Ausgang (2190) einen korrigierten geschätzten Wert der Winkelposition zu erzeugen, umfassen.

9. Vorrichtung nach Anspruch 8, **dadurch gekennzeichnet, dass** die Mittel zum Bestimmen eines geschätzten Wertes der Winkelposition des Rotors (100) außerdem Hysteresefilterungsmittel (220) umfassen, die am Ausgang des digitalen Addierers (219) angeordnet sind.

10. Vorrichtung nach einem der Ansprüche 1 bis 8, **dadurch gekennzeichnet, dass** die mehrphasige drehende elektrische Maschine (10) vom Starter-Generator-Typ ist.

11. Vorrichtung nach einem der Ansprüche 1 bis 10, **dadurch gekennzeichnet, dass** die ersten Signale ($CH_1$-$CH_3$) dreiphasig sind.

12. Vorrichtung nach einem der Ansprüche 1 bis 11, **dadurch gekennzeichnet, dass** die Phasenverschiebungen zwischen den ersten Signalen ($CH_1$-$CH_3$) 60° oder 120° betragen.

13. Mehrphasigen drehende elektrische Maschine, die einen Rotor (100) und einen Stator (104) umfasst, **dadurch gekennzeichnet, dass** sie eine Vorrichtung (2) zum Bestimmen der Winkelposition des Rotors (100) nach einem der vorhergehenden Ansprüche umfasst.

**Claims**

1. Device for determining the angular position of a rotor of a polyphase rotating electric machine comprising a stator and a plurality of magnetic field sensors, which are fixed with respect to the stator and are able to deliver first signals representative of a rotating magnetic field detected by the said sensors, **characterized in that** it comprises means (201) for generating, on the basis of linear combinations of the said first signals (2001-2003), at least one first (2010) and one second (2011) sinusoidal signals, phase-shifted by a determined value $\phi$ which is different from zero and from 180°, representing a so-called real angular position of the rotor (100), **in that** it comprises means for determining a value of so-called estimated angular position of the rotor (100) estimated by slaving between the said real and estimated angular positions by implementing a feedback loop called a "tracking" loop (206-214, 207-215) reinjecting as input at least third and fourth sinusoidal signals determined on the basis of the said value of estimated angular position and phase-shifted by the said determined value $\phi$, and **in that** the said means for determining the estimated value of angular position of the rotor comprise first and second means for multiplying (208-209) the said first and third signals, on the one hand, and the said second and fourth sinusoidal signals, on the other hand, and for subtracting (210) the results of these multiplications, in such a way that the following relation is satisfied at any instant:

$$sin(\theta_{real}+\varphi_1).sin(\theta_{est}+\varphi_2) - sin(\theta_{real}+\varphi_2).sin(\theta_{est}+\varphi_1) = sin(\varphi_2 - \varphi_1).sin(\theta_{real} - \theta_{est}),$$

in which relation $\theta_{real}$ and $\theta_{est}$ are the said real and estimated angular positions, $\phi_1$ and $\phi_2$ phase shifts of the said first and second sinusoidal signals with respect to a reference frame ($RRef\theta$) tied to the said stator (104) and the said determined phase shift $\phi$ being equal to ($\phi_2 - \phi_1$).

2. Device according to Claim 1, **characterized in that** the said first and second multiplying means consist of first and second analogue multiplier circuits (208-209), **in that** the said first analogue multiplier (208) receives on a first input the said first sinusoidal signal and on a second input the said third sinusoidal signal, and **in that** the said second analogue multiplier (209) receives on a first input the said second sinusoidal signal and on a second input the said fourth sinusoidal signal.

3. Device according to Claim 2, **characterized in that** the said subtracting means consist of an analogue subtraction circuit (210) receiving on an adding input (+) the output signal (2080) of the said first multiplier circuit (208) and on a subtractive input (-) the output signal of the said first multiplier circuit (209), so as to generate on its output a signal equal to [$sin(\theta_{real}+\phi_1).sin(\theta_{est}+\phi_2) - sin(\theta_{real}+\phi_2).sin(\theta_{est}+\phi_1)$].

4. Device according to Claim 1, **characterized in that** the said means for determining the said value of estimated angular position of the rotor comprise, disposed in cascade at the output of the said analogue subtraction circuit (210), an analogue amplifier (211) of determined gain, an analogue-digital converter (212), a digital corrector module (213), of the so-called proportional integral type "PI" and a digital integrator module (216), **in that** the said digital corrector module (213) provides on its output (2130) a digital signal representative of the rotation speed of the said rotor (217) and **in that** the said digital integrator (216) provides on its output (2160) a signal representative of the said estimated angular position.

5. Device according to Claim 4, **characterized in that** the said feedback loop comprises first and second parallel branches, **in that** the said first branch comprises, in cascade, a first digital table (214) addressed by the said signal representative of the said estimated angular position (2160) and generating as output a digital value of sine representing the said third sinusoidal signal and a first digital converter (206) converting the said digital value of sine into an analogue signal transmitted to the second input of the said first multiplication circuit (208), and **in that** the said second branch comprises, in cascade, a second digital table (215) addressed by the said signal representative of the said estimated angular position (2160) and generating as output a digital value of sine representing the said fourth sinusoidal signal and a second digital converter (207) converting the said digital value of sine into an analogue signal transmitted to the second input of the said second multiplication circuit (209).

6. Device according to Claim 5, **characterized in that** the said first and second digital tables (214-215) consist of read-only memories of the so-called R.O.M. type.

7. Device according to Claim 6, **characterized in that** the said means for determining value of estimated angular position of the rotor (100) comprise means (218-219) for applying to the said value of estimated angular position an initial setting value giving the true physical angular position of the said rotor (100) for a zero initial reference value.

8. Device according to Claim 7, **characterized in that** the said means for applying a setting value comprise a memory (218) storing the said value and a digital adder (219) adding together the setting value and the said value of estimated angular position, so as to generate as output (2190) a corrected estimated angular position value.

9. Device according to Claim 8, **characterized in that** the said means for determining a value of estimated angular position of the rotor (100) furthermore comprise hysteretic filtering means (220) disposed at the output of the said digital adder (219).

10. Device according to any one of Claims 1 to 8, **characterized in that** the said polyphase rotating electric machine (10) is of the so-called alternator-starter type.

**11.** Device according to any one of Claim 1 to 10, **characterized in that** the said first signals ($CH_1$ - $CH_3$) are three-phase.

**12.** Device according to any one of Claim 1 to 11, **characterized in that** phase shifts between the said first signals ($CH_1$ - $CH_3$) are 60° or 120°.

**13.** Polyphase rotating electric machine comprising a rotor (100) and a stator (104), **characterized in that** it comprises a device (2) for determining the angular position of the said rotor (100) according to any one of the preceding claims.

EP 2 124 327 B1

Fig. 1

14

**Fig. 2**

**Fig. 3**

Fig. 4

2200

Ecart = Position (n) - PositionFiltrée (n-1)

2201

OUI

Ecart ≤ 0

NON

2203

PositionFiltrée (n) = Position (n)

2202

Ecart ≤ -jeu

OUI

NON

2204

2205

PositionFiltrée(n) = Position(n) + jeu

PositionFiltrée(n) = PositionFiltrée(n-1)

2206

2207

220

**Fig. 5**

**EP 2 124 327 B1**

## RÉFÉRENCES CITÉES DANS LA DESCRIPTION

**Documents brevets cités dans la description**

- US 20020063491 A1

- WO 2006010864 A2